# EUROPEAN PATENT APPLICATION

(11) **EP 4 733 757 A1**
(43) Date de publication de la demande: **29.04.2026**
(21) Numéro de dépôt: 24306811.1
(22) Date de dépôt: 27.10.2024
(51) Int. Cl.: G01N 30/96, G01N 30/52, G01N 30/88

(54) **ÉVALUATION ET SÉLECTION DE D'ÉCHANGES DE RÉSINE**

(71) Demandeur: APPLEXION, 01700 Saint Maurice de Beynost (FR)
(72) Inventeur: DESHAIES, Stacy, 69003 Lyon (FR); VALERY, Eric, 69270 Rochetaillée sur Saône (FR); PASQUIER, Audrey, 69007 Lyon (FR); HONORE, Franck, 94700 Maisons Alfort (FR)
(74) Mandataire: Bandpay & Greuter

(57) **Abrégé**

L'invention concerne une méthode d'évaluation multifactorielle d'une résine échangeuse d'ions comprenant :
- une première évaluation de la résine selon un procédé de vieillissement de la résine par oxydation et une mesure de la capacité d'échange de la résine ;
- une deuxième évaluation de la résine selon un procédé de cycles de déshydratation de la résine et de réhydratation de la résine, et une détermination finale d'une proportion de particules endommagées ;
- une troisième évaluation de la résine selon un procédé comprenant une pluralité de cycles de traitement de la résine avec une solution acide et une solution basique, et une détermination finale d'une proportion de particules endommagées.

Une résine peut être sélectionnée à l'aide d'un procédé comprenant la mise en oeuvre de la méthode d'évaluation multifactorielle sur une pluralité de résines et le choix de la résine.

## Description

### DOMAINE DE L'INVENTION

L'invention concerne une méthode d'évaluation multifactorielle d'une résine échangeuse d'ions sous forme de particules mettant en oeuvre au moins deux procédés d'évaluation de la résine distincts. L'invention concerne également un procédé de sélection d'une résine utilisant cette méthode.

### ARRIERE-PLAN TECHNIQUE

Les résines échangeuses d'ions sont généralement utilisées dans les procédés industriels pour des applications en lien notamment avec la purification et la séparation de composés chimiques.

Ces résines sont le siège d'un échange ionique par transfert d'ions avec une solution, à savoir une captation d'ions par mise en contact avec une charge suivie d'une libération d'ions distincts par mise en contact avec un éluant ou un régénérant. Ces résines, selon la technologie utilisée, sont appelées résines échangeuse d'ions, résines de chromatographie, résines adsorbantes ou encore résines chélatantes.

Les performances de la résine sont couramment évaluées sur la base de leur fonctionnement au contact du composé chimique d'intérêt pour l'application visée.

Une reproduction à l'échelle du laboratoire du procédé industriel est fréquemment mise en place en répétant plusieurs fois chaque étape dans le but de sélectionner des résines compatibles avec l'application envisagée. Toutefois, ces tests ne permettent pas d'anticiper le comportement des résines sélectionnées au fil des cycles sur plusieurs mois voire plusieurs années.

Les cycles des procédés industriels sont généralement des cycles longs allant de plusieurs heures à plusieurs jours au cours desquels la résine est exposée à différents fluides à composition chimique variable tels que des produits à purifier (ensemble d'impuretés ou d'ions de la phase liquide), un acide ou une base, un solvant ou un liquide de dépollution, et généralement de l'eau pour le lavage.

Selon l'application, le nombre de cycles appliqué à la résine varie. Dans le cas d'un procédé d'échange d'ions ou de décoloration, le nombre de cycles peut être compris entre 500 à 1000 et s'échelonner entre 2000 et 6000 cycles dans le cas d'un procédé chromatographique. A ce titre, l'anticipation de la durée de vie d'une résine dans les conditions réelles du procédé n'est pas réalisable.

Il existe donc un besoin de trouver une méthode de test afin de pouvoir anticiper la résistance de la résine aux cycles des procédés industriels.

Le document The oxidation résistance of cation exchange resins de J. A. Dale et J. Irving, Purolite Application notes (2007) décrit des tests d'oxydation d'une résine cationique à l'aide de peroxyde d'hydrogène s'échelonnant sur plusieurs jours par l'intermédiaire de mesures du taux d'humidité.

Le document Ion Exchange Resin - Pilot and Resin Testing de D. D. Downey, Extraction (2018), (https://www.purolite.com/fr/index/core-technologies/industry/hydrometallurgy/ion-exchange-resin-pilot-and-resin-testing) présente une méthode de test osmotique comprenant un cyclage acide-base sur plusieurs résines échangeuses d'ions.

Toutefois, il existe un besoin de proposer des tests d'évaluation plus performants permettant de caractériser la résistance de la résine à des sollicitations chimique et/ou mécanique, ces tests étant simples et rapides à mettre en oeuvre, afin de comparer efficacement des résines entre elles.

### RESUME DE L'INVENTION

L'invention concerne les objets suivants.

Objet 1. Procédé d'évaluation d'une résine échangeuse d'ions sous forme de particules comprenant une mesure initiale de la capacité d'échange de la résine, ainsi qu'une pluralité d'étapes de vieillissement de la résine par oxydation et une mesure de la capacité d'échange de la résine après chaque étape de vieillissement, dans lequel les différentes étapes de vieillissement comprennent le traitement de la résine par une solution oxydante contenant un agent oxydant, la concentration en agent oxydant et/ou la durée de l'étape étant différente entre les différentes étapes.

Objet 2. Procédé d'évaluation selon l'objet 1, dans lequel la résine échangeuse d'ions est une résine cationique.

Objet 3. Procédé d'évaluation selon l'objet 2, dans lequel l'agent oxydant est le peroxyde d'hydrogène.

Objet 4. Procédé d'évaluation selon l'objet 2 ou 3, dans lequel les étapes de vieillissement sont menées à une température de 25 à 75°C, de préférence de 40 à 60°C.

Objet 5. Procédé d'évaluation selon l'un des objets 2 à 4, comprenant une première étape de vieillissement, une deuxième étape de vieillissement et une troisième étape de vieillissement, la deuxième étape de vieillissement ayant une durée plus étendue que la première étape de vieillissement et la concentration de la solution oxydante en agent oxydant lors de la troisième étape de vieillissement étant plus élevée que la concentration de la solution oxydante en agent oxydant lors de la deuxième étape de vieillissement.

Objet 6. Procédé d'évaluation selon l'objet 5, dans lequel la première étape de vieillissement a une durée de 1 à 12 h, de préférence de 4 à 8 h et les deuxième et troisième étapes de vieillissement ont une durée de 16 à 32 h, de préférence de 20 à 28 h.

Objet 7. Procédé d'évaluation selon l'un des objets 5 à 6, dans lequel la solution oxydante a une concentration massique en agent oxydant de 1 à 10 %, de préférence de 2 à 5 % lors de la première étape de vieillissement et de la deuxième étape de vieillissement, et la solution oxydante a une concentration massique en agent oxydant de 10 à 30 %, de préférence de 12 à 20 % lors de la troisième étape de vieillissement.

Objet 8. Procédé d'évaluation selon l'objet 1, dans lequel la résine échangeuse d'ions est une résine anionique.

Objet 9. Procédé d'évaluation selon l'objet 8, dans lequel l'agent oxydant est l'hypochlorite de sodium.

Objet 10. Procédé d'évaluation selon l'objet 9 ou 10, comprenant une première étape de vieillissement, une deuxième étape de vieillissement et une troisième étape de vieillissement, la deuxième étape de vieillissement ayant une durée plus étendue que la première étape de vieillissement et la troisième étape de vieillissement ayant une durée plus étendue que la deuxième étape de vieillissement.

Objet 11. Procédé d'évaluation selon l'objet 10, dans lequel la première étape de vieillissement a une durée de 1 à 12 h, de préférence de 4 à 8 h, la deuxième étape de vieillissement a une durée de 16 à 32 h, de préférence de 20 à 28 h, la troisième étape de vieillissement a une durée de 3 à 7 jours, de préférence de 4 à 6 jours.

Objet 12. Procédé d'évaluation selon l'un des objets 8 à 11, dans lequel les étapes de vieillissement sont menées à une température de 10 à 50°C, de préférence de 20 à 30°C.

Objet 13. Procédé d'évaluation selon l'un des objets 8 à 12, dans lequel la concentration massique de la solution oxydante en agent oxydant est de 1 à 10 %, de préférence de 2 à 5 %.

Objet 14. Procédé d'évaluation selon l'un des objets 1 à 13, dans lequel, à chaque étape de vieillissement, la solution oxydante contient un catalyseur, de préférence des ions Fe³⁺.

Objet 15. Procédé d'évaluation d'une résine échangeuse d'ions sous forme de particules comprenant successivement une détermination initiale d'une proportion de particules endommagées, une pluralité de cycles de déshydratation de la résine et de réhydratation de la résine, et une détermination finale d'une proportion de particules endommagées.

Objet 16. Procédé d'évaluation selon l'objet 15, dans lequel chaque déshydratation de la résine est réalisé à une température de 85 à 125°C, de préférence de 100 à 110°C.

Objet 17. Procédé d'évaluation selon l'un des objets 15 ou 16, chaque déshydratation a une durée supérieure à 3 h, de préférence supérieure à 6 h.

Objet 18. Procédé d'évaluation selon l'un des objets 15 à 17, comprenant de 2 à 15, de préférence de 4 à 12 cycles de déshydratation de la résine et de réhydratation de la résine.

Objet 19. Procédé d'évaluation selon l'un des objets 15 à 18, dans lequel chaque détermination d'une proportion de particules endommagées est réalisée par observation microscopique.

Objet 20. Méthode d'évaluation multifactorielle d'une résine échangeuse d'ions sous forme de particules, comprenant au moins deux, de préférence trois des évaluations suivantes :
- une première évaluation de la résine selon le procédé de l'un quelconque des objets 1 à 14 ;
- une deuxième évaluation de la résine selon le procédé de l'un quelconque des objets 15 à 19 ;
- une troisième évaluation de la résine selon un procédé comprenant successivement une détermination initiale d'une proportion de particules endommagées, une pluralité de cycles de traitement de la résine avec une solution acide et une solution basique, et une détermination finale d'une proportion de particules endommagées.

Objet 21. Méthode d'évaluation multifactorielle selon l'objet 20, dans laquelle, dans le procédé de la troisième évaluation, le nombre de cycles de traitement de la résine est de 10 à 800, de préférence de 30 à 500.

Objet 22. Méthode d'évaluation multifactorielle selon l'un des objets 20 ou 21, dans laquelle, dans le procédé de la troisième évaluation, la solution basique comprend du NaOH à une concentration massique de 1 à 10%, de préférence de 2 à 6%.

Objet 23. Méthode d'évaluation multifactorielle selon l'un des objets 20 à 22, dans laquelle la résine est une résine anionique faible styrénique, et de préférence, dans le procédé de la troisième évaluation :
- la solution acide comprend un acide organique, de préférence encore de l'acide lactique, de préférence encore à une concentration massique de 10 à 30%, et/ou
- le nombre de cycles de traitement et de 10 à 50.

Objet 24. Méthode d'évaluation multifactorielle selon l'un des objets 20 à 22, dans laquelle la résine est une résine anionique faible acrylique, et de préférence, dans le procédé de la troisième évaluation :
- le nombre de cycles de traitement compris est de 100 à 300, et/ou la solution acide comprend un acide organique, de préférence encore de l'acide lactique, de préférence encore à une concentration massique comprise de 10 à 30%.

Objet 25. Méthode d'évaluation multifactorielle selon l'un des objets 20 à 22, dans laquelle la résine est une résine anionique forte, et de préférence, dans le procédé de la troisième évaluation :
- le nombre de cycles de traitement est de 250 à 750, et/ou
- la solution acide comprend de l'acide chlorhydrique, de préférence encore à une concentration massique de 1 à 10%.

Objet 26. Méthode d'évaluation multifactorielle selon l'un des objets 20 à 22, dans laquelle la résine est une résine gel cationique forte, et de préférence, dans le procédé de la troisième évaluation :
- le nombre de cycles de traitement est de 250 à 750, et/ou
- la solution acide comprend de l'acide chlorhydrique, de préférence encore à une concentration massique de 1 à 10%.

Objet 27. Méthode d'évaluation multifactorielle selon l'un des objets 20 à 22, dans laquelle la résine est une résine macroporeuse cationique forte ou faible, et de préférence, dans le procédé de la troisième évaluation :
- le nombre de cycles de traitement est de 250 à 750, et/ou
- la solution acide comprend de l'acide chlorhydrique, de préférence encore à une concentration massique de 1 à 10%.

Objet 28. Méthode d'évaluation multifactorielle selon l'un des objets 20 à 27, dans laquelle, dans le procédé de la troisième évaluation, chaque détermination de proportion de particules endommagées est réalisée par observation microscopique.

Objet 29. Méthode d'évaluation multifactorielle selon l'un des objets 20 à 28, comprenant la première évaluation et la deuxième évaluation.

Objet 30. Méthode d'évaluation multifactorielle selon l'un des objets 20 à 28, comprenant la première évaluation et la troisième évaluation.

Objet 31. Méthode d'évaluation multifactorielle selon l'un des objets 20 à 28, comprenant la deuxième évaluation et la troisième évaluation.

Objet 32. Méthode d'évaluation multifactorielle selon l'un des objets 20 à 28, comprenant la première évaluation, la deuxième évaluation et la troisième évaluation.

Objet 33. Méthode d'évaluation multifactorielle selon l'un des objets 20 à 32, comprenant une évaluation globale de la résine obtenue par pondération de la première, deuxième et/ou troisième évaluation.

Objet 34. Méthode d'évaluation multifactorielle selon l'objet 33, dans laquelle la pondération dépend d'une pluralité de facteurs relatifs à une utilisation de la résine, ces facteurs étant de préférence choisis parmi la nature chimique d'un éluant ou d'un régénérant ou d'une solution de lavage destiné à être mis en contact avec la résine, une température de stockage, de transport ou d'utilisation de la résine, la position de regards sur une colonne contenant la résine et la nature de produits destinés à être purifiés ou séparés au moyen de la résine.

Objet 35. Procédé de sélection d'une résine comprenant la mise en oeuvre du procédé d'évaluation selon l'un des objets 1 à 19 ou de la méthode d'évaluation multifactorielle selon l'un des objets 20 à 34 sur une pluralité de résines, et le choix d'une résine en fonction du résultat du procédé d'évaluation ou de la méthode d'évaluation multifactorielle.

Objet 36. Procédé de sélection d'une résine selon l'objet 35, dans lequel la résine sélectionnée est utilisée pour un procédé de purification ou de séparation par échange d'ions.

La présente invention permet de répondre au besoin exprimé dans l'état de la technique. Elle fournit plus particulièrement une méthode d'évaluation multifactorielle d'une résine échangeuse d'ions sous forme de particules.

Cette méthode d'évaluation d'une résine comprend trois procédés d'évaluation (ou de test) distincts, qui peuvent être mis en oeuvre séparément et associés en combinaison par deux ou par trois. Ces procédés d'évaluation permettent de solliciter chimiquement et mécaniquement une résine par oxydation et/ou par exposition à des solutions acide-base et/ou par cycle de déshydratation/réhydratation. Ces procédés sont de courte durée et donnent donc lieu à une caractérisation rapide de la résistance d'une résine.

Cette méthode d'évaluation prévoit la mesure de la capacité d'échange initiale et finale ou la détermination de la proportion de particules endommagées, selon le critère testé. Les données obtenues permettent de comparer des résines entre elles afin de sélectionner la résine la plus adaptée à une application donnée.

### DESCRIPTION DE MODES DE REALISATION DE L'INVENTION

L'invention est maintenant décrite plus en détail et de façon non limitative dans la description qui suit.

### Résine échangeuse d'ions

Dans la présente invention, la résine échangeuse d'ions se présente sous la forme de particules solides. Ces particules solides peuvent avoir par exemple une forme essentiellement sphérique. Ces particules peuvent avoir une taille Dv50 comprise entre 0,1 et 1,6 mm, de préférence entre 0,25 et 1,2 mm.

Le terme Dv50 désigne le 50^{ème} centile de la distribution de taille des particules, c'est-à-dire que 50 % des particules ont une taille (c'est-à-dire un diamètre, lorsqu'elles sont sphériques) inférieure au Dv50 et 50 % ont une taille supérieure au Dv50. Il s'agit de la médiane de la distribution volumétrique des particules de résine. La valeur du Dv50 peut être déterminée par granulométrie par diffraction laser. Dans certains cas, les particules individuelles peuvent avoir une tendance à l'agrégation, auquel cas il convient de déterminer leur taille par microscopie optique ou électronique, puisque la taille apparente mesurée par granulométrie par diffraction laser est alors plus importante que la taille particulaire réelle.

La résine peut être une résine cationique ou une résine anionique. Dans la présente invention, une résine cationique possède des groupements fonctionnels chargés négativement (liés à un support) permettant l'échange de cations. A l'inverse, une résine anionique comprend des groupements fonctionnels chargés positivement (liés à un support) adaptés à l'échange d'anions.

Une résine cationique, dans son état initial comporte des contre-ions positifs, par exemple monovalents, notamment H⁺, Na⁺ ou K⁺, ou alternativement divalents, notamment Ca²⁺ ou Mg²⁺.

Une résine anionique, dans son état initial comporte des contre-ions négatifs, par exemple monovalents, notamment OH⁻, Cl⁻, base libre ou NO₃⁻ ou alternativement divalents, notamment SO₄²⁻.

La résine peut être cationique forte (de type acide fort), cationique faible (de type acide faible), anionique forte (de type base forte) ou anionique faible (de type base faible).

Une résine cationique forte est une résine qui comporte des groupements fonctionnels sulfoniques.

Une résine cationique faible est une résine qui comporte des groupements fonctionnels carboxyliques ; acide iminodiacétique ou aminophosphonique.

Une résine anionique forte est une résine qui comporte des groupements fonctionnels aminés quaternaires.

Une résine anionique faible est une résine qui comporte majoritairement des groupements fonctionnels aminés primaires, secondaires ou tertiaires.

La résine peut être formée par un polymère portant les groupes fonctionnels, le polymère pouvant être par exemple un polymère styrénique ou acrylique ; la résine peut comprendre des liaisons intermoléculaires, en particulier des liaisons divinylbenzène. Le polymère peut être de structure gel, de préférence avec une structure semi-cristalline, une taille de pores fine et sensiblement uniforme ; les liaisons intermoléculaires peuvent être distribuées de manière sensiblement uniforme dans la matrice. Alternativement, le polymère peut être de structure macroporeuse ; les macropores peuvent être créés de façon artificielle grâce à un agent porogène ; par exemple, la surface des pores peut être supérieure à 500 m²/g, ou supérieure à 1000 m²/g.

Ainsi, la résine peut être notamment une résine anionique faible styrénique macroporeuse, une résine anionique faible acrylique gel, une résine anionique forte gel ou macroporeuse avec groupements fonctionnels triméthylamine (type I) ou diméthyléthanolamine (type II), une résine gel cationique, ou une résine macroporeuse cationique forte ou faible.

### Premier procédé d'évaluation : traitement de la résine par oxydation

Le premier procédé d'évaluation de la résine échangeuse d'ions comprend une mesure initiale de la capacité d'échange de la résine, ainsi qu'une pluralité d'étapes de vieillissement de la résine par oxydation et une mesure de la capacité d'échange de la résine après chaque étape de vieillissement, dans lequel les différentes étapes de vieillissement comprennent le traitement de la résine par une solution oxydante contenant un agent oxydant, la concentration en agent oxydant et/ou la durée de l'étape étant différente entre les différentes étapes.

Ce procédé permet de tester la stabilité chimique de la résine. Il peut être qualifié d'indicateur de résistance chimique.

De préférence, chaque étape de vieillissement est mis en oeuvre sur un échantillon différent de résine. Ainsi, les différentes étapes de vieillissement peuvent être mises en oeuvre au moins en partie simultanément, sur des échantillons dédiés.

La résine échangeuse d'ions fixe les ions présents dans la solution et, au fil des cycles, la résine se sature. Dans la présente invention, la capacité d'échange correspond à la quantité maximale d'ions fixés sur la résine. Cette capacité d'échange correspond au nombre de sites où l'échange d'ions peut se produire. Cette capacité d'échange peut être massique ou volumique, c'est-à-dire exprimée respectivement en fonction du poids de résine ou du volume de résine. Généralement, la capacité d'échange massique est exprimée en équivalents par kilogramme (éq/kg) et la capacité d'échange volumique en équivalents par litre de résine (éq/L). Il est fait référence ci-dessous à la capacité d'échange volumique, étant entendu qu'un simple facteur multiplicatif permet de passer à la capacité d'échange massique si on le souhaite. Chaque mesure de la capacité d'échange peut être effectuée en suivant le protocole suivant :
- De préférence, lavage de la résine.
- Optionnellement, conversion de la résine dans son état initial.
- De préférence, séchage complet de la résine comprenant :
   ∘ par exemple un séchage par filtration sous vide (de type entonnoir Büchner), pour éliminer l'eau libre,
   ∘ suivi par exemple d'un séchage sur balance thermique ou étuve, pour éliminer également l'eau liée.
- De préférence, mesure du taux d'humidité de la résine.
- Passage sur la résine d'une solution contenant des ions à échanger avec la résine, collecte du liquide en sortie et analyse de celui-ci.

Le lavage de la résine peut comprendre la mise en contact de la résine avec de l'eau déionisée ou osmosée et séparation du surnageant. Ce protocole peut être répété plusieurs fois, par exemple tant que le surnageant est limpide.

La conversion de la résine dans son état initial peut être effectuée en mettant en contact la résine avec une solution contenant les contre-ions de la résine. De préférence, la mise en contact est effectuée avec une solution contenant une quantité molaire de contre-ions supérieure à la quantité molaire (attendue) de sites d'échange sur la résine d'un facteur au moins 2, ou au moins 3, ou au moins 4, par exemple d'un facteur 2 à 10, ou 3 à 5. Par exemple, on peut utiliser : une solution d'acide chlorhydrique pour une résine cationique forte ou faible à contre-ions H⁺ ou pour une résine anionique forte ou faible à contre-ions Cl⁻, une solution de chlorure de sodium pour une résine cationique forte à contre-ions Na⁺, une solution de chlorure de calcium pour une résine cationique forte à contre-ions Ca²⁺, une solution d'hydroxyde de potassium pour une résine cationique forte ou faible à contre-ions K⁺, une solution d'hydroxyde de sodium pour une résine anionique forte ou faible à contre-ions OH⁻, une solution d'acide sulfurique pour une résine cationique forte ou faible à contre-ions H⁺ ou pour une résine anionique forte ou faible à contre-ions SO₄²⁻. Cette étape de conversion est inutile si la résine est déjà dans son état initial, par exemple si elle est neuve / inutilisée.

Le séchage peut comprendre une filtration sous vide, par exemple sur un entonnoir Büchner. Ce séchage permet l'élimination de l'eau libre.

Le séchage peut comprendre une étape de séchage sur balance thermique, qui peut être effectué à une température de 70 à 150°C, de référence de 90 à 120°C pendant une durée de 15 à 90 minutes, de préférence de 30 à 60 minutes. Ce séchage permet l'élimination de l'eau liée à la résine. Ce séchage peut alternativement être effectué dans une étuve.

Le taux d'humidité de la résine peut être mesuré en comparant le poids de la résine avant et après le séchage complet. Le taux d'humidité de la résine est une des caractéristiques physico-chimiques principales de la résine.

Le passage de la solution contenant des ions à échanger avec la résine peut comprendre la mise de la résine en colonne, et l'injection de la solution sur la résine.

Les résines cationiques peuvent être sous n'importe quelle forme cationique pour le tests d'oxydation.

Lors de la mise en colonne de la résine une colonne comportant par exemple un volume de 5 à 25 mL, de préférence de 15 à 22 mL, peut être utilisée sur laquelle un volume par exemple de 50 à 150 mL d'HCl à une concentration massique de 10% est injecté par exemple à raison de 0,5 à 4 mL/min, de préférence de 1,5 à 2,5 mL/min. Cette étape permet de remplacer les contre-ions de la résine par des ions H+, les contre-ions de la résine sont ainsi élués en sortie de colonne. Un rinçage par de l'eau osmosée (par exemple un volume de 40 à 100 mL, par exemple encore de 60 mL environ) est ensuite effectué, le volume total sorti de la colonne est alors mesuré. La composition peut être analysée en chromatographie ionique ou par titration pour obtenir une capacité volumique correspondant au nombre de sites actifs cationiques (équivalents) de la résine pour un volume donné de résine.

De préférence, les résines anioniques sont sous forme chlorure pour les étapes d'oxydation.

De préférence, l'espèce oxydante utilisée est de l'hypochlorite de sodium et contient des ions chlorure. Ces derniers risqueraient de s'échanger avec la résine si cette dernière n'est pas sous forme chlorure.

Lors de la mise en colonne de la résine anionique, une colonne comportant par exemple un volume de 5 à 25 mL, de préférence de 15 à 22 mL, peut être utilisée sur laquelle un volume par exemple de 50 à 150 mL de NaOH à une concentration massique de 4% est injecté par exemple à raison de 0,5 à 4 mL/min, de préférence de 1,5 à 2,5 mL/min. Cette étape permet de remplacer les contre-ions de la résine par des ions OH⁻, les contre-ions de la résine sont ainsi élués en sortie de colonne. Un rinçage par de l'eau osmosée (par exemple un volume de 40 à 100 mL, par exemple encore de 60 mL environ) est ensuite effectué, le volume total sorti de la colonne est alors mesuré. La composition peut être analysée en chromatographie ionique ou par titration pour obtenir une capacité volumique correspondant au nombre de sites actifs anioniques (équivalents) de la résine pour un volume donné de résine.

Le liquide prélevé en sortie peut être analysé en chromatographie ionique afin de déterminer la concentration ionique de l'échantillon, plus précisément du contre-ion de la résine étudiée Cette concentration est ensuite rapportée au volume de résine afin obtenir la capacité volumique.

Le premier procédé d'évaluation prévoit d'effectuer une pluralité d'étapes de vieillissement de la résine, et de mesurer la perte de capacité d'échange à ces différentes étapes de vieillissement. Par exemple deux étapes de vieillissement peuvent être utilisées, ou trois étapes de vieillissement, ou quatre étapes de vieillissement. De préférence trois étapes de vieillissement sont utilisées.

Les étapes de vieillissement diffèrent entre elles de par les conditions utilisées : par exemple de par la nature de l'agent oxydant, et/ou la concentration de l'agent oxydant dans la solution oxydante, et/ou la durée de l'étape, et/ou la température de l'étape. De préférence, elles diffèrent de par la concentration de l'agent oxydant dans la solution oxydante et/ou la durée de l'étape (la nature de l'agent oxydant et la température étant les mêmes entre les différentes étapes). L'utilisation d'une pluralité d'étapes de vieillissement différentes, plus ou moins drastiques, permet de caractériser la stabilité de la résine de manière plus fine qu'avec une seule étape de vieillissement. En effet, il a été découvert par les présents inventeurs que certaines résines subissent une perte rapide de capacité d'échange dès l'étape de vieillissement la moins drastique, tout en ne perdant pas significativement de capacité d'échange supplémentaire avec les étapes de vieillissement plus drastiques, alors que d'autres résines subissent une perte de capacité d'échange seulement lorsqu'une étape de vieillissement plus drastique est mise en oeuvre. L'amplitude de la perte de capacité d'échange dépend lui aussi de la résine. Ainsi, une résine peut perdre en capacité d'échange plus rapidement ou facilement qu'une autre, mais avec une amplitude qui peut être moindre.

La solution oxydante peut être une solution aqueuse.

L'agent oxydant utilisé dans le premier procédé d'évaluation peut être choisi parmi l'oxygène dissous, le chlore libre, le dioxyde de chlore, l'acide peracétique, l'acide chromique, l'acide nitrique, les peroxydes, notamment le peroxyde d'hydrogène, et l'hypochlorite de sodium. De préférence l'agent oxydant est le peroxyde d'hydrogène si la résine est cationique, et l'hypochlorite de sodium si la résine est anionique. Le peroxyde d'hydrogène peut également être utilisé avec une résine anionique, en utilisant de préférence une température suffisamment élevée pour le vieillissement.

La concentration massique en agent oxydant peut être de 1 à 30 %. Par exemple, lorsque le peroxyde d'hydrogène est utilisé, sa concentration massique peut être de 1 à 30 %, notamment de 2 à 20 %. Lorsque l'hypochlorite de sodium est utilisé, sa concentration massique peut être de 1 à 10 %, de préférence de 2 à 6 %.

Un catalyseur peut être présent dans la solution oxydante. A titre d'exemple, on peut utiliser un métal de transition sous sa forme ionique tel que des ions Fe³⁺ ou Cu²⁺.

De préférence, l'ajout d'ions Fe³⁺ est réalisée par l'intermédiaire d'une solution étalon de fer à une concentration massique de 0,5 à 2 g/L, de préférence d'environ 1 g/L, par exemple dans de l'acide nitrique (concentration massique de 1 à 4%, de préférence d'environ 2%, dans l'eau). Le fer a par exemple une concentration massique finale de 1 à 5 ppm, par exemple d'environ 2,5 ppm pour le traitement par oxydation des résines anioniques et une concentration massique finale de 2 à 20 ppm, par exemple d'environ 5 ppm, pour le traitement par oxydation des résines cationiques.

Les étapes de vieillissement peuvent être menées à une température de 10 à 75°C, et par exemple : de 25 à 75°C, de préférence de 40 à 60°C pour une résine cationique, et de 10 à 50°C, de préférence de 20 à 30°C pour une résine anionique. Alternativement, la température peut être également de 25 à 75°C, de préférence de 40 à 60°C, lorsque le peroxyde d'hydrogène est utilisé avec une résine anionique.

A chaque étape de vieillissement, un volume apparent de résine (volume de lit de résine) peut être mis en contact avec un volume de solution oxydante, dans un rapport de volume de solution oxydante sur le volume apparent de résine de 1:1 à 10:1, par exemple de 1,5:1 à 4:1, notamment d'environ 2:1.

Le premier procédé d'évaluation, en particulier pour une résine cationique, peut comprendre une première étape de vieillissement, une deuxième étape de vieillissement et une troisième étape de vieillissement avec la deuxième étape de vieillissement ayant une durée plus étendue que la première étape de vieillissement et la concentration de la solution oxydante en agent oxydant lors de la troisième étape de vieillissement étant plus élevée que la concentration de la solution oxydante en agent oxydant lors de la deuxième étape de vieillissement. La concentration en agent oxydant peut être la même à la première étape et à la deuxième étape. La durée de la deuxième étape peut être la même que la durée de la troisième étape. La température peut être la même aux trois étapes.

Ainsi, la première étape de vieillissement peut avoir une durée de 1 à 12 h, de préférence de 4 à 8 h et les deuxième et troisième étapes de vieillissement peuvent avoir une durée de 16 à 32 h, de préférence de 20 à 28 h.

La solution oxydante de la première étape de vieillissement et de la deuxième étape de vieillissement peut avoir une concentration massique en agent oxydant (notamment peroxyde d'hydrogène) de 1 à 10 %, de préférence de 2 à 5 %.

La solution oxydante de la troisième étape de vieillissement peut avoir une concentration massique en agent oxydant (notamment peroxyde d'hydrogène) de 10 à 30 %, de préférence de 12 à 20 %.

Le premier procédé d'évaluation, notamment pour une résine anionique, peut comprendre une première étape de vieillissement, une deuxième étape de vieillissement et une troisième étape de vieillissement avec la deuxième étape de vieillissement ayant une durée plus étendue que la première étape de vieillissement et la troisième étape de vieillissement ayant une durée plus étendue que la deuxième étape de vieillissement. Les trois étapes peuvent être effectuées avec la même concentration d'agent oxydant et à la même température.

La première étape de vieillissement peut avoir une durée de 1 à 12 h, de préférence de 4 à 8 h, la deuxième étape de vieillissement peut avoir une durée de 16 à 32 h, de préférence de 20 à 28 h, et la troisième étape de vieillissement peut avoir une durée de 3 à 7 jours, de préférence de 4 à 6 jours.

La solution oxydante à chaque étape de vieillissement peut avoir une concentration massique en agent oxydant de 1 à 10 %, de préférence de 2 à 5 %.

Dans l'ensemble des exemples précédents, il est possible de prévoir une ou plusieurs étapes supplémentaires à l'issue de la troisième étape, ayant un durée supérieure à celle de la troisième étape ; et/ou dans laquelle ou lesquelles la solution oxydante a une concentration massique en agent oxydant supérieure à celle de la solution oxydante lors de la troisième étape.

### Deuxième procédé d'évaluation : traitement de la résine par déshydratation

Le deuxième procédé d'évaluation selon la méthode 2 de la résine échangeuse d'ions comprend successivement une détermination initiale d'une proportion de particules endommagées, une pluralité de cycles de déshydratation de la résine et de réhydratation de la résine, et une détermination finale d'une proportion de particules endommagées.

Ce procédé permet de tester la résistance de la résine à la déshydratation et à la réhydratation. Il peut être également qualifié d'indicateur de dureté.

La déshydratation de la résine peut être réalisé à une température de 85 à 125°C, de préférence de 100 à 110°C.

D'autres procédés de déshydratation peuvent être considérés, telle qu'une déshydratation sous gaz inerte, de préférence du diazote ou de l'air sec, ou par mise en contact de la résine avec une solution d'éthanol suivi d'une mise à l'étuve à une température de 85 à 125°C, de préférence de 100 à 110°C.

Chaque déshydratation du deuxième procédé d'évaluation peut avoir une durée supérieure ou égale à 3 h, de préférence supérieure ou égale à 6 h, par exemple de 6 h à 24 h. Il peut être effectué dans une étuve.

La réhydratation peut être effectuée en plaçant la résine dans une solution aqueuse, de préférence dans de l'eau déionisée ou osmosée.

Le deuxième procédé d'évaluation peut comprendre de 2 à 10, de préférence de 4 à 6, par exemple 5 cycles de déshydratation de la résine et de réhydratation de la résine pour les résines autres que les résines acryliques anioniques fortes. Il peut comprendre de 6 à 15, de préférence de 8 à 12, par exemple 10 cycles de déshydratation de la résine et de réhydratation de la résine pour les résines acryliques anioniques fortes.

La détermination d'une proportion de particules endommagées du procédé d'évaluation peut être réalisé par observation microscopique. Cette observation microscopique peut se faire par microscopie optique, sur un échantillon de particules. On peut considérer comme particules endommagées les particules qui sont cassées ou fragmentées et ont donc perdu leur forme initiale, ainsi que les particules qui ont conservé leur forme initiale mais qui présentent une ou des fêlures apparentes (particules fissurées).

La formation de fragments, lorsque la résine est utilisée en conditions réelles, peut conduire à une perte progressive de la quantité de résine dans l'installation (lorsque le procédé mis en oeuvre comporte une étape de définage ou de lavage du lit de résine en mode ascendant, pouvant soulever les fragments et à les évacuer de la cellule) et donc à une perte de capacité. Alternativement, si les fragments restent dans l'installation, leur accumulation conduit à une perte de charge et donc à une augmentation de la pression nécessaire dans l'installation ou à une réduction de la vitesse opératoire et donc de la productivité.

L'apparition de fêlures témoigne de la fragilisation de la résine et donc de la formation future de fragments.

Dans la deuxième évaluation, on peut tenir compte soit de la proportion de particules fissurées, soit de la proportion de fragments, soit de la proportion totale de particules endommagées (fissurées et fragments), soit à la fois de la proportion de particules fissurées et de la proportion de fragments (en tant que deux critères indépendants).

### Troisième procédé d'évaluation : traitement de la résine par une solution acide-base

Le troisième procédé d'évaluation de la résine échangeuse d'ions comprend successivement une détermination initiale d'une proportion de particules endommagées, une pluralité de cycles de traitement de la résine avec une solution acide et une solution basique, et une détermination finale d'une proportion de particules endommagées.

Ce procédé permet de tester la résistance de la résine à la contraction et expansion par variation osmotique. Il peut être également qualifié d'indicateur de la résistance à la répétabilité des cycles.

Le nombre de cycles de traitement de la résine du procédé d'évaluation peut être de 10 à 800, de préférence de 30 à 500.

La solution basique peut comprendre du NaOH à une concentration massique de 1 à 10%, de préférence de 2 à 6%.

La solution acide peut comprendre de l'acide chlorhydrique à une concentration massique de 1 à 10 %, de préférence de 3 à 7 % ; ou un acide organique, notamment de l'acide lactique, à une concentration massique de 10 à 30 %, de préférence de 15 à 25 %.

Par exemple, dans le cas d'une résine anionique faible styrénique, le nombre de cycles de traitement peut être de 10 à 50 ; la solution acide peut comprendre un acide organique, de préférence encore de l'acide lactique, par exemple à une concentration massique de 10 à 30 %, notamment de 15 à 25 %.

Par exemple, dans le cas d'une résine anionique faible acrylique, le nombre de cycles de traitement peut être de 100 à 300 ; la solution acide peut comprendre un acide organique, de préférence encore de l'acide lactique, par exemple à une concentration massique de 10 à 30 %, notamment de 15 à 25 %.

Par exemple, dans le cas d'une résine anionique forte, le nombre de cycles de traitement peut être de 250 à 750 ; la solution acide peut comprendre de l'acide chlorhydrique, par exemple à une concentration massique de 1 à 10 %, de préférence de 3 à 7 %.

Par exemple, dans le cas d'une résine gel cationique forte, le nombre de cycles de traitement peut être de 250 à 750 ; la solution acide peut comprendre de l'acide chlorhydrique, par exemple à une concentration massique de 1 à 10 %, de préférence de 3 à 7 %.

Par exemple, dans le cas d'une résine macroporeuse cationique forte ou faible, le nombre de cycles de traitement peut être de 250 à 750 ; la solution acide peut comprendre de l'acide chlorhydrique, par exemple à une concentration massique de 1 à 10 %, de préférence de 3 à 7%.

Afin d'effectuer les cycles de traitement de la résine avec une solution acide et une solution basique, il est possible de placer un échantillon de résine dans une colonne, et d'injecter alternativement dans la colonne l'une ou l'autre solution en provenance de deux réservoirs, par exemple au moyen de pompes dédiées. La durée de chaque injection peut être par exemple de 30 secondes à 5 minutes, par exemple de 1 minute à 2 minute. Lors de chaque injection, le volume de solution injecté peut représenter par exemple de 3 à 10 fois le volume du lit de résine soumis au test.

La résine peut être lavée, rincée et séchée avant mise en oeuvre des cycles de traitement.

La détermination de la proportion de particules endommagées peut être effectuée exactement de la même manière que dans le deuxième procédé d'évaluation.

Dans la troisième évaluation, on peut tenir compte soit de la proportion de particules fissurées, soit de la proportion de fragments, soit de la proportion totale de particules endommagées (fissurées et fragments), soit à la fois de la proportion de particules fissurées et de la proportion de fragments (en tant que deux critères indépendants).

### Méthode d'évaluation multifactorielle

L'évaluation multifactorielle d'une résine échangeuse d'ions sous forme de particules comprend au moins deux, de préférence trois des évaluations suivantes :
- une première évaluation de la résine selon le premier procédé ;
- une deuxième évaluation de la résine selon le deuxième procédé ;
- une troisième évaluation de la résine selon le troisième procédé.

Dans la présente invention, l'évaluation multifactorielle correspond à l'évaluation d'une résine selon plusieurs facteurs, c'est-à-dire selon plusieurs (aux moins deux) évaluations découlant de différents procédés de test de la résine.

L'évaluation multifactorielle peut comprendre la première évaluation et la deuxième évaluation.

L'évaluation multifactorielle peut comprendre la première évaluation et la troisième évaluation.

L'évaluation multifactorielle peut comprendre la deuxième évaluation et la troisième évaluation.

L'évaluation multifactorielle peut comprendre la première évaluation, la deuxième évaluation et la troisième évaluation.

L'évaluation multifactorielle peut comprendre une évaluation globale de la résine. Cette évaluation globale peut être obtenue par pondération de la première évaluation, de la deuxième évaluation et/ou de la troisième évaluation.

L'évaluation globale peut comprendre l'attribution d'un score global à la résine à partir de scores individuels associés à la première évaluation, deuxième évaluation et/ou troisième évaluation. Le score global peut être obtenu par pondération des scores individuels par des facteurs de pondération.

Un score individuel unique peut être associé à chacune des première, deuxième et troisième évaluations. Alternativement, plusieurs scores individuels peuvent être associés à chaque évaluation.

Par exemple, pour la première évaluation, un score individuel peut être calculé pour chaque étape de vieillissement. Celui-ci peut correspondre à la capacité d'échange de la résine à l'issue de l'étape de vieillissement.

Par exemple, pour chacune de la deuxième évaluation et de la troisième évaluation, un score individuel peut être calculé en lien avec la proportion de particules fissurées, et un score individuel peut être calculé en lien avec la proportion de particules fragmentées (ou fragments). Ce score individuel peut être notamment une capacité résiduelle théorique, calculé comme étant la capacité initiale de la résine réduite par la proportion de particules fissurées ou fragmentées, respectivement. Alternativement, un seul score individuel peut être calculé, notamment une capacité résiduelle théorique, calculé à partir de la capacité initiale de la résine réduite par la proportion totale de particules endommagées.

Les scores individuels peuvent également être relatifs, par exemple un rapport de capacité (capacité mesurée après vieillissement, ou capacité résiduelle théorique telle que définie ci-dessus) sur la capacité initiale. Cela peut être particulièrement intéressant lorsque le procédé dont la mise en oeuvre est envisagée ne fait pas directement appel à la capacité, tel qu'un procédé chromatographique ne reposant pas sur mécanisme d'échange d'ions (mais reposant par exemple sur un phénomène d'adsorption par interaction de groupements aromatiques, de groupements hydrophobes ou de groupements hydrophiles non ioniques).

Les facteurs de pondération peuvent par exemple varier de 1 à 100 %, ou de 5 à 100 % (ou toutes autres valeurs proportionnelles à celles-ci).

Un facteur de pondération associé au score individuel lié à la présence de fragments, dans la deuxième évaluation ou la troisième évaluation, peut être supérieur au facteur de pondération associé au score individuel lié à la présence de particules fissurées. Alternativement, il peut être égal.

Les facteurs de pondération associés aux scores individuels liés aux différentes étapes de vieillissement, dans la première évaluation, peuvent être identiques ou différents. S'ils sont différents, le facteur de pondération associé au score individuel lié à la première étape peut être supérieur au facteur de pondération associé au score individuel lié à la deuxième étape ; et/ou le facteur de pondération associé au score individuel lié à la deuxième étape peut être supérieur au facteur de pondération associé au score individuel lié à la troisième étape.

Les facteurs de pondération peuvent être définis en fonction de paramètres relatifs à l'utilisation réelle ou projetée de la résine (dans un procédé de séparation ou de purification), parmi lesquels :
- la nature chimique d'un éluant ou de tout autre solution aqueuse destiné(e) à être mis en contact avec la résine (par exemple une solution de régénération, ou une solution de lavage, par exemple de désinfection) ;
- une température (envisagée) de stockage, de transport ou d'utilisation de la résine ;
- la nature de produits destinés à être purifiés ou séparés au moyen de la résine ;
- un comportement connu de la résine, par exemple une tendance importante à la contraction et à l'expansion (la position des regards d'une colonne contenant la résine pouvant notamment être choisie en fonction de cette tendance à la contraction et à l'expansion).

Par exemple, lorsque la résine est connue pour avoir une tendance importante à la contraction et à l'expansion, il est approprié d'apporter une plus forte pondération à la troisième évaluation.

Par exemple, lorsque les regards de la colonne sont placés à des hauteurs très différentes, il est approprié d'apporter une plus forte pondération à la troisième évaluation.

Par exemple, lorsque la résine est destinée à être mise en contact avec un acide organique, susceptible d'induire une forte contraction de la résine, il est approprié d'apporter une plus forte pondération à la troisième évaluation.

Par exemple, lorsque la résine est destinée à être mise en contact avec une substance oxydante, par exemple avec de l'acide chlorhydrique ou de l'acide sulfurique (par exemple en tant que solution de régénération) pouvant induire une oxydation de la résine, il est approprié d'apporter une plus forte pondération à la première évaluation.

Par exemple, lorsque la température de stockage de la résine envisagée est élevée (entraînant un risque de déshydratation de la résine), il est approprié d'apporter une plus forte pondération à la deuxième évaluation.

Par exemple, lorsque les produits destinés à être purifiés ou séparés au moyen de la résine sont ou contiennent des protéines (notamment des produits laitiers), entraînant un risque de contamination ou de dégradation de la résine nécessitant un nettoyage fréquent ou agressif de la résine, il est approprié d'apporter une plus forte pondération à la première évaluation.

### Procédé de sélection d'une résine

Le procédé de sélection d'une résine comprend la mise en oeuvre d'un des trois procédés d'évaluation décrits ci-dessus, ou de la méthode d'évaluation multifactorielle décrite ci-dessus, sur une pluralité de résines (candidates), et le choix d'une résine en fonction du résultat du procédé d'évaluation ou de la méthode d'évaluation multifactorielle.

Comme indiqué ci-dessus, en fonction de l'utilisation qui est envisagée pour la résine à sélectionner, des facteurs de pondération peuvent être ajustés dans la méthode d'évaluation multifactorielle.

Une comparaison des scores obtenus par les résines candidates permet de sélectionner la résine ayant le score le plus favorable. Bien entendu, le score peut également dépendre d'autres paramètres, tels que par exemple le prix des différentes résines candidates, ou la capacité d'échange initiale des résines candidates.

La résine sélectionnée à partir de ce procédé de sélection peut être ensuite utilisée pour un procédé de purification ou de séparation par échange d'ions.

### EXEMPLES

Les exemples suivants illustrent l'invention sans la limiter.

### Example 1 - Traitement d'une résine par oxydation (premier procédé)

### 1. 1 - Protocole de mesure de la capacité d'une résine

Des mesures de capacité sur différentes résines ont été réalisées par une succession d'étapes.

Les résines à traiter étaient une résine cationique et une résine anionique.

Dans le cas des résines cationiques, le traitement comprenait une étape de lavage. La résine cationique à analyser a été placée dans un bécher en présence d'eau osmosée ; après décantation, le surnageant a été enlevé. Cette étape de lavage a été répétée tant que le surnageant était limpide.

Lorsque la résine cationique n'était pas neuve, la résine a été convertie dans son état initial (par exemple H, Na, Ca, K) par passage de 400 % d'équivalent ionique de la capacité attendue en colonne ou en bécher à l'aide d'une solution de HCl, de NaCl, de CaCl₂ ou de KOH.

Un premier échantillon de résine cationique neuve ou convertie à l'étape précédente a été ensuite séché par filtration sous vide, dit séchage Büchner.

Le taux d'humidité de la résine a été mesuré par tarage d'une soucoupe vide, puis la pesée de la résine avant et après séchage à l'étuve a été effectué. Le séchage à l'étuve a été effectué à 110°C pendant 45 minutes.

Un second échantillon de résine cationique neuve ou convertie a été mis en colonne de 20 mL. Une solution de 100 mL d'acide chlorhydrique à une concentration massique de 10 % a été injectée à un débit de 2 mL/min, puis un rinçage avec 60 mL d'eau osmosée a été effectué. Le volume sorti de la colonne a été mesuré et la composition ionique a été analysée en chromatographie ionique ou par titration pour obtenir une capacité volumique.

Dans le cas des résines anioniques, le traitement comprenait une étape de lavage. La résine cationique à analyser a été placée dans un bécher en présence d'eau osmosée ; après décantation, le surnageant a été enlevé. Cette étape de lavage a été répétée tant que le surnageant était limpide.

Lorsque la résine anionique n'était pas neuve, la résine a été convertie sous forme Cl⁻ par passage de 400 % d'équivalent ionique de la capacité attendue en colonne à l'aide d'une solution de HCl.

Un premier échantillon de résine anionique neuve ou convertie à l'étape précédente a ensuite été séchée par filtration sous vide, dit séchage Büchner.

Le taux d'humidité de la résine a été mesuré par tarage d'une soucoupe vide, puis la pesée de la résine avant et après séchage à l'étuve a été effectué. Le séchage à l'étuve a été effectué à 110°C pendant 45 minutes.

Un second échantillon de résine anionique neuve ou convertie a été mis en colonne de 20 mL. Une solution de 100 mL d'hydroxyde de sodium à une concentration massique de 4% a été injectée à un débit de 2 mL/min, puis un rinçage avec 60 mL d'eau osmosée a été effectué. Le volume sorti de la colonne a été mesuré et la composition ionique a été analysée en chromatographie ionique pour obtenir une capacité volumique totale.

### 1.2 - Protocole d'oxydation

Des traitements par oxydation sur différentes résines ont été réalisés par une succession d'étapes.

Les résines à traiter étaient une résine cationique ou une résine anionique.

Tout d'abord, le traitement comprenait une étape de lavage. La résine à analyser a été placée dans un bécher en présence d'eau osmosée, après décantation, le surnageant a été enlevé. Cette étape de lavage a été répétée tant que le surnageant est limpide.

La résine a ensuite été rincée et séchée par filtration sous vide.

La résine a été pesée et son volume a été mesuré sur une échelle d'une dizaine de millilitres afin de calculer la densité de la résine.

Selon la catégorie de la résine, un traitement chimique d'oxydation différent a été appliqué à la résine.

Dans le cas d'une résine cationique, trois conditions différentes d'oxydation ont été testées (correspondant à trois étapes de vieillissement telles que décrites ci-dessus) :
- Un volume de 10 mL de résine a été exposé à une solution de 20 mL de concentration massique en H₂O₂ de 3 % et 100 µL de solution étalon de Fe³⁺ à 1 g/L dans de l'acide nitrique (2% dans l'eau) portant la concentration massique en fer à 5 ppm, pendant une durée de 6 h à 50°C.
- Un volume de 10 mL de résine a été exposé à une solution de 20 mL de concentration massique en H₂O₂ de 3 % et 100 µL de solution étalon de Fe³⁺ à 1 g/L dans de l'acide nitrique (2% dans l'eau) portant la concentration massique en fer à 5 ppm, pendant une durée de 24 h à 50°C.
- Un volume de 10 mL de résine a été exposé à une solution de 20 mL de concentration massique en H₂O₂ de 15 % et 100 µL de solution étalon de Fe³⁺ à 1g/L dans de l'acide nitrique (2% dans l'eau) portant la concentration massique en fer à 5 ppm, pendant une durée de 24 h à 50°C.

Dans le cas d'une résine anionique, trois conditions différentes d'oxydation ont été testées (correspondant à trois étapes de vieillissement telles que décrites ci-dessus) :
- Un volume de 10 mL de résine a été exposé à une solution de 20 mL de concentration massique en ions chlorure (issus d'une solution d'hypochlorite de sodium) de 2,5 % et 50 µL de solution étalon de Fe³⁺ à 1g/l dans acide nitrique (2% dans l'eau) portant la concentration en fer à 2,5 ppm, pendant une durée de 6h à 25°C.
- Un volume de 10 mL de résine a été exposé à une solution de 20 mL de concentration massique en ions chlorure (issus d'une solution d'hypochlorite de sodium) de 2,5 % et 50 µL de solution étalon de Fe³⁺ à 1 g/L dans une solution aqueuse d'acide nitrique (concentration massique de 2%) portant la concentration en fer à 2,5 ppm, pendant une durée de 24 h à 25°C.
- Un volume de 10 mL de résine a été exposé à une solution de 20 mL de concentration massique en ions chlorure (issus d'une solution d'hypochlorite de sodium) de 2,5 % et 50 µL de solution étalon de Fe³⁺ à 1g/L dans une solution aqueuse d'acide nitrique (concentration massique de 2%) portant la concentration en fer à 2,5 ppm, pendant une durée de 5 jours à 25°C.

Après traitement par oxydation, la résine cationique ou anionique a été lavée dans un erlenmeyer par ajout d'eau, agitation, décantation et retrait du surnageant à quatre reprises.

Une fois que la résine cationique ou la résine anionique a été oxydée, sa capacité volumique a été mesurée à nouveau en suivant le même protocole que celui décrit ci-dessus.

### Exemple 2 - Traitement d'une résine par déshydratation (deuxième procédé)

Une observation microscopique initiale de chaque résine a été réalisée afin d'évaluer le pourcentage de fragments et de particules (billes) fêlées par rapport au nombre de billes observées.

La résine a ensuite été soumise à un traitement par déshydratation par une succession d'étapes.

Tout d'abord, la résine a été disposée dans un cylindre de 5 mL par tassage de manière à avoir un volume de résine de 5 mL.

La résine a ensuite été disposée dans une coupelle d'aluminium en utilisant un minimum d'eau.

La coupelle a été placée dans une étuve à 105°C pendant une durée minimale de 6 h.

La coupelle a été sortie de l'étuve, puis 15 mL d'eau osmosée ont été ajoutés sur la résine.

Ce cycle de déshydratation-réhydratation de la résine a été répété 5 fois pour l'ensemble des résines, à l'exception des résines acryliques anioniques fortes pour lesquelles le nombre de cycle est de 10.

Un temps d'attente de 10 minutes a été mis en place avant de réaliser une nouvelle observation microscopique.

L'observation microscopique finale de la résine suite au traitement par déshydratation a permis de déduire la variation du pourcentage de fragments et de billes fêlées par rapport au nombre de billes observées dû au traitement.

### Exemple 3 - Traitement d'une résine par une solution acide et basique (troisième procédé)

Une observation microscopique initiale de chaque résine a été réalisée afin d'évaluer le pourcentage de fragments et de billes fêlées par rapport au nombre de billes observées.

La résine a ensuite été soumise à un traitement à l'aide de solutions acide et basique en suivant une succession d'étapes.

Le traitement comprenait une étape de lavage. La résine à analyser a été placée dans un bécher en présence d'eau osmosée, après décantation, le surnageant a été enlevé. Cette étape de lavage a été répétée tant que le surnageant est limpide.

La résine a ensuite été rincée et séchée par filtration sous vide.

La résine a été pesée et son volume a été mesuré sur une échelle d'une dizaine de millilitres afin de calculer la densité de la résine.

La résine a été placée dans une colonne de 20 mL avec 1 mL de liquide au-dessus du niveau de la résine.

Le dispositif utilisé comprenait deux pompes et des tuyaux permettant de relier ces deux pompes à l'entrée d'une colonne. Les tuyaux ont été préalablement purgés. Les pompes ont été réglées à un débit de 40 mL/min et elles ont été utilisées en alternance pendant 80 secondes chacune.

Selon la catégorie de la résine, un traitement chimique différent par exposition à une solution contractante et à une solution expansive a été appliqué à la résine. La résine a été exposée à un volume de solution contractante 2,6 fois supérieur au volume de la résine et à un volume de solution expansive 2 fois supérieur au volume de la résine. L'alternance d'exposition de la résine à une solution contractante et expansive forme un cycle et ce cycle a été répété entre 30 et 500 fois selon la nature chimique de la résine.

Une résine styrénique anionique faible a été exposée à 30 cycles d'alternance d'une solution d'acide lactique à une concentration massique de 20 % et à une solution basique d'hydroxyde de sodium à une concentration massique de 4 %.

Une résine acrylique anionique faible a été exposée à 200 cycles d'alternance d'une solution d'acide lactique à une concentration massique de 20 % et à une solution basique d'hydroxyde de sodium à une concentration massique de 4 %.

Une résine anionique forte a été exposée à 500 cycles d'alternance d'une solution d'acide chlorhydrique à une concentration massique de 5 % et à une solution basique d'hydroxyde de sodium à une concentration massique de 4 %.

Une résine gel cationique forte a été exposée à 100 cycles d'alternance d'une solution d'acide chlorhydrique à une concentration massique de 5 % et à une solution basique d'hydroxyde de sodium à une concentration massique de 4 %.

Une résine macroporeuse cationique forte a été exposée à 500 cycles d'alternance d'une solution d'acide chlorhydrique à une concentration massique de 5 % et à une solution basique d'hydroxyde de sodium à une concentration massique de 4 %.

L'observation microscopique finale de la résine suite au traitement par exposition à une solution acide et basique a permis de déduire la variation du pourcentage de fragments et de billes fêlées par rapport au nombre de billes observées initialement.

### Exemple 4 : qualification globale de résines sans pondération

Une pluralité de résines de la gamme XA commercialisées par Applexion a été qualifiée selon les protocoles exposés précédemment :
- XA 3041 : résine anionique faible styrénique macroporeuse ;
- XA 3112 : résine anionique faible acrylique gel ;
- XA 4141 CI : résine anionique forte macroporeuse acrylique ;
- XA 4241 CI : résine anionique forte macroporeuse styrénique ;
- XA 4043 CI : résine anionique forte macroporeuse styrénique ;
- XA 2023 Na : résine cationique forte gel styrénique ;
- XA 2023 Na ALT : résine cationique forte gel styrénique ;
- XA 2023 Na ALT2: résine cationique forte macroporeuse styrénique.

Les tests d'oxydation (à 3 niveaux) ont été réalisés et les capacités volumique ont été mesurées à chaque étape.

La capacité volumique présente le nombre de contre-ions par litre de résines.

Les capacités volumique de chaque étape sont regroupées dans le tableau 1.

**Tableau 1**

| Résine | Caractéristiques initiales | Traitement par oxydation | | |
|---|---|---|---|---|
| | Capacité volumique (éq/L) | Niveau 1 : capacité volumique (éq/L) | Niveau 2 : capacité volumique (éq/L) | Niveau 3 : capacité volumique (éq/L) |
| XA 3041 | 1,4 | 1,3 | 1,3 | 1,1 |
| XA 3112 | 1,3 | 1,1 | 1,1 | 1,1 |
| XA 4141 Cl | 0,7 | 0,7 | 0,6 | 0,6 |
| XA 4241 Cl | 1,4 | 1,1 | 1,1 | 1,1 |
| XA 4043 Cl | 1,1 | 1 | 1 | 1 |
| XA 2023 Na | 2 | 1,7 | 1 | 0,9 |
| XA 2023 Na ALT | 2,5 | 2,1 | 1,6 | 1,5 |
| XA 2023 Na ALT2 | 2,1 | 2,1 | 1,3 | 1,3 |

Les tests de cyclage acide/base ont ensuite été réalisés et les capacités ont été mesurées à chaque étape.

La capacité résiduelle correspond à la capacité initiale volumique de la résine à laquelle a été enlevée la capacité des billes fissurées ou cassées (fragments).

Les capacités résiduelles sont regroupées dans le tableau 2.

**Tableau 2**

| Résine | Caractéristiques initiales | Traitement par acide-base | | |
|---|---|---|---|---|
| | Capacité volumique (éq/L) | Billes fissurées (%) | Fragments (%) | Capacité résiduelle (éq/L) |
| XA 3041 | 1,4 | 0 | 20 | 1,12 |
| XA 3112 | 1,3 | 1 | 1 | 1,29 |
| XA 4141 | 0,7 | 0 | 1 | 0,69 |
| XA 4241 Cl | 1,4 | 0 | 1 | 1,39 |
| XA 4043 Cl | 1,1 | 1 | 3 | 1,06 |
| XA 2023 Na | 2 | 4 | 0 | 1,92 |
| XA 2023 Na ALT | 2,5 | 3 | 1 | 2,40 |
| XA 2023 Na ALT 2 | 2,1 | 2 | 1 | 2,08 |

Les tests de déshydratation ont ensuite été réalisés et les capacités ont été mesurées à chaque étape.

La capacité résiduelle correspond à la capacité initiale volumique de la résine à laquelle a été enlevée la capacité des billes fissurées ou cassées (fragments).

Les capacités résiduelles sont regroupées dans le tableau 3.

**Tableau 3**

| Résine | Caractéristiques initiales | Traitement par déshydratation | | |
|---|---|---|---|---|
| | Capacité volumique (éq/L) | Billes fissurées (%) | Fragments (%) | Capacité résiduelle (éq/L) |
| XA 3041 | 1,4 | 0 | 0 | 1,40 |
| XA 3112 | 1,3 | 2 | 15 | 1,08 |
| XA 4141 Cl | 0,7 | 0 | 12 | 0,62 |
| XA 4241 Cl | 1,4 | 0 | 1 | 1,39 |
| XA 4043 Cl | 1,1 | 1 | 6 | 1,02 |
| XA 2023 Na | 2 | 1 | 6 | 1,86 |
| XA 2023 Na ALT | 2,5 | 0 | 1 | 2,48 |
| XA 2023 Na ALT2 | 2,1 | 0 | 1 | 2,08 |

### Exemple 5 : Comparaison de résines anioniques faibles sur deux applications avec pondération : purification d'acides organiques et produits laitiers

### 5.1 - Purification d'acides organiques

L'application de purification d'acides organiques est particulièrement stressante d'un point de vue osmotique (contraction/expansion des billes) pour les résines puisqu'elles subissent une succession de gonflements par les fonctions carboxyliques des acides organiques puis de dégonflement lors des étapes de régénération basique.

Les tests d'oxydation (à 3 niveaux) ont été réalisés et les capacités volumiques ont été mesurées à chaque étape. Les pourcentages de pondération ont été établis.

Les capacités volumique et pourcentages de pondération de chaque étape sont regroupées dans le tableau 4.

**Tableau 4**

| Résine | Caractéristiques initiales | Traitement par oxydation | | |
|---|---|---|---|---|
| | Capacité volumique (éq/L) | Niveau 1 : capacité volumique (éq/L) | Niveau 2 : capacité volumique (éq/L) | Niveau 3 : capacité volumique (éq/L) |
| XA 3041 | 1,4 | 1,3 | 1,3 | 1,1 |
| XA 3112 | 1,3 | 1,1 | 1,1 | 1,1 |
| Pondération (%) | | 5 | 5 | 5 |

Les tests de cyclage acide/base ont ensuite été réalisés et les capacités ont été mesurées à chaque étape. Les pourcentages de pondération ont été établis.

Les capacités résiduelles et pourcentages de pondération sont regroupés dans le tableau 5.

**Tableau 5**

| Résine | Caractéristiques initiales | Traitement par acide-base | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 3041 | 1,4 | 0 | 1,4 | 20 | 1,12 |
| XA 3112 | 1,3 | 1 | 1,29 | 1 | 1,29 |
| Pondération (%) | | - | 25 | - | 100 |

Les tests de déshydratation ont ensuite été réalisés et les capacités ont été mesurées à chaque étape. Les pourcentages de pondération ont été établis.

Les capacités résiduelles et pourcentages de pondération sont regroupés dans le tableau 6.

**Tableau 6**

| Résine | Caractéristiques initiales | Traitement par déshydratation | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 3041 | 1,4 | 0 | 1,4 | 0 | 1,40 |
| XA 3112 | 1,3 | 2 | 1,27 | 15 | 1,11 |
| Pondération (%) | | - | 5 | - | 5 |

La notation s'effectue ainsi :
- Pour le traitement acide-base, les billes fissurées et cassées (fragments) ont été distinguées en pondérant d'avantage les fragments étant donné qu'ils apportent des dommages et des pertes de charges irréversibles. Une bille fissurée sera fragilisée mais continuera de fonctionner et n'apportera pas immédiatement de pertes de charge.
- La pondération a été faite sur les capacités volumiques des tests d'oxydation (de 5 à 100%) et sur les capacités volumiques résiduelles des tests acide-base et déshydratation (de 5 à 100%) et la note globale correspond à la somme des capacités volumiques et résiduelles pondérées par le coefficient associé, le coefficient de pondération étant plus élevé pour le traitement acide-base.

La note globale de chaque résine anionique faible testée est regroupée dans le tableau 7.

**Tableau 7**

| Résine | Note globale selon application acides organiques |
|---|---|
| XA 3041 | 1,8 |
| XA 3112 | 1,89 |

Sur cette application particulièrement stressante d'un point de vue osmotique, la résine XA 3112 a montré une note globale plus élevée et est la plus adaptée.

### 5.2 - Purification de produits laitiers

L'application de purification de produits laitiers est une application sanitaire et nécessite l'emploi de désinfectants tout au long du procédé de purification. Ces désinfectants sont généralement oxydants et cette application est, de ce fait, stressante d'un point oxydatif pour les résines.

Sur cette application, les traitements par oxydation ont été d'avantage pondérés que le traitement acide-base et déshydratation, la pondération étant également plus importante pour le niveau 1 que pour les niveaux 2 et 3 du traitement par oxydation. En effet, le niveau 1 correspond à l'utilisation la plus courante de la résine.

Les tests d'oxydation (à 3 niveaux) ont été réalisés et les capacités volumique ont été mesurées à chaque étape. Les pourcentages de pondération ont été établis.

Les capacités volumique et pourcentages de pondération de chaque étape sont regroupées dans le tableau 8.

**Tableau 8**

| Résine | Caractéristiqu es initiales | Traitement par oxydation | | |
|---|---|---|---|---|
| | Capacité volumique (éq/L) | Niveau 1 : capacité volumique (éq/L) | Niveau 2 : capacité volumique (éq/L) | Niveau 3 : capacité volumique (éq/L) |
| XA 3041 | 1,4 | 1,3 | 1,3 | 1,1 |
| XA 3112 | 1,3 | 1,1 | 1,1 | 1,1 |
| Pondération (%) | | 100 | 75 | 50 |

Les tests de cyclage acide/base ont ensuite été réalisés et les capacités ont été mesurées à chaque étape. Les pourcentages de pondération ont été établis.

Les capacités résiduelles et les pourcentages de pondération sont regroupés dans le tableau 9.

**Tableau 9**

| Résine | Caractéristiques initiales | Traitement par acide-base | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 3041 | 1,4 | 0 | 1,4 | 20 | 1,12 |
| XA 3112 | 1,3 | 1 | 1,29 | 1 | 1,29 |
| Pondération (%) | | - | 5 | - | 5 |

Les tests de déshydratation ont ensuite été réalisés et les capacités ont été mesurées à chaque étape. Les pourcentages de pondération ont été établis.

Les capacités résiduelles et les pourcentages de pondération sont regroupés dans le tableau 10.

**Tableau 10**

| Résine | Caractéristiques initiales | Traitement par déshydratation | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 3041 | 1,4 | 0 | 1,4 | 0 | 1,40 |
| XA 3112 | 1,3 | 2 | 1,27 | 15 | 1,11 |
| Pondération (%) | | - | 5 | - | 5 |

La note globale de chaque résine anionique faible testée est regroupée dans le tableau 11.

**Tableau 11**

| Résine | Note globale selon application acides organiques |
|---|---|
| XA 3041 | 3,09 |
| XA 3112 | 2,72 |

Sur cette application particulièrement stressante d'un point de vue oxydatif, la résine XA3041 a montré une note globale plus élevée et est la plus adaptée.

### Exemple 6 : Comparaison de résines cationiques fortes sur deux applications avec pondération : purification de lysine et décalcification

### 6.1 - Purification de lysine

La purification de lysine est connue pour être oxydante car la matière première peut contenir des molécules oxydantes. L'utilisation d'acides lors du procédé peut également avoir un léger impact de contraction/expansion sur la résine.

Les tests d'oxydation (à 3 niveaux) ont été réalisés et les capacités volumique ont été mesurées à chaque étape. Les pourcentages de pondération ont été établis.

Les capacités volumique et pourcentages de pondération de chaque étape sont regroupées dans le tableau 12.

**Tableau 12**

| Résine | Caractéristiques initiales | Traitement par oxydation | | |
|---|---|---|---|---|
| | Capacité volumique (éq/L) | Niveau 1 : capacité volumique (éq/L) | Niveau 2 : capacité volumique (éq/L) | Niveau 3 : capacité volumique (éq/L) |
| XA 2023 Na | 2 | 1,7 | 1 | 0,9 |
| XA 2023 Na ALT | 2,5 | 2,1 | 1,6 | 1,5 |
| XA 2023 Na ALT2 | 2,1 | 2,1 | 1,3 | 1,3 |
| Pondération (%) | | 100 | 75 | 50 |

Les tests de cyclage acide/base ont ensuite été réalisés et les capacités ont été mesurées à chaque étape. Les pourcentages de pondération ont été établis.

Les capacités résiduelles et pourcentage de pondération sont regroupées dans le tableau 13.

**Tableau 13**

| Résine | Caractérist. initiales | Traitement par acide-base | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 2023 Na | 2 | 4 | 1,92 | 0 | 2 |
| XA 2023 Na ALT | 2,5 | 3 | 2,43 | 1 | 2,48 |
| XA 2023 Na ALT2 | 2,1 | 2 | 2,06 | 1 | 2,08 |
| Pondération (%) | | - | 10 | - | 20 |

Les tests de déshydratation ont ensuite été réalisés et les capacités ont été mesurées à chaque étape. Les pourcentages de pondération ont été établis.

Les capacités résiduelles et pourcentages de pondération sont regroupés dans le tableau 14.

**Tableau 14**

| Résine | Caractérist. initiales | Traitement par déshydratation | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 2023 Na | 2 | 1 | 1,98 | 6 | 1,88 |
| XA 2023 Na ALT | 2,5 | 0 | 2,5 | 1 | 2,48 |
| XA 2023 Na ALT2 | 2,1 | 0 | 2,1 | 1 | 2,08 |
| Pondération (%) | | - | 5 | - | 5 |

La note globale de chaque résine cationique forte testée est regroupée dans le tableau 15.

**Tableau 15**

| Résine | Note globale selon application acides organiques |
|---|---|
| XA 2023 Na | 3,69 |
| XA 2023 Na ALT | 5,04 |
| XA 2023 ALT2 | 4,56 |

Sur cette application particulièrement stressante d'un point de vue oxydatif, la résine XA 2023 Na ALT a montré une note globale plus élevée et est la plus adaptée.

### 6.2 - Décalcification

Les trois résines cationiques fortes exemplifiées ont également été utilisées en décalcification. Dans le cas d'une unité de décalcification qui opère généralement à 95°C, les résines peuvent être exposées à des températures élevées d'application ou de stockage dans le cas d'un pays chaud. Dans ce cas, le test de déshydratation sera davantage pondéré.

Les tests d'oxydation (à 3 niveaux) ont été réalisés et les capacités volumique ont été mesurées à chaque étape. Les pourcentages de pondération ont été établis.

Les capacités volumique et pourcentages de pondération de chaque étape sont regroupés dans le tableau 16.

**Tableau 16**

| Résine | Caractérist. initiales | Traitement par oxydation | | |
|---|---|---|---|---|
| | Capacité volumique (éq/L) | Niveau 1 : capacité volumique (éq/L) | Niveau 2 : capacité volumique (éq/L) | Niveau 3 : capacité volumique (éq/L) |
| XA 2023 Na | 2 | 1,7 | 1 | 0,9 |
| XA 2023 Na ALT | 2,5 | 2,1 | 1,6 | 1,5 |
| XA 2023 ALT2 | 2,1 | 2,1 | 1,3 | 1,3 |
| Pondération (%) | | 5 | 5 | 5 |

Les tests de cyclage acide/base ont ensuite été réalisés et les capacités ont été mesurées à chaque étape. Les pourcentages de pondération ont été établis.

Les capacités résiduelles et pourcentages de pondération sont regroupés dans le tableau 17.

**Tableau 17**

| Résine | Caractérist. initiales | Traitement par acide-base | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 2023 Na | 2 | 4 | 1,92 | 0 | 2 |
| XA 2023 Na ALT | 2,5 | 3 | 2,43 | 1 | 2,48 |
| XA 2023 Na ALT2 | 2,1 | 2 | 2,06 | 1 | 2,08 |
| Pondération (%) | | - | 5 | - | 5 |

Les tests de déshydratation ont ensuite été réalisés et les capacités ont été mesurées à chaque étape. Les pourcentages de pondération ont été établis.

Les capacités résiduelles sont regroupées dans le tableau 18.

**Tableau 18**

| Résine | Caractérist. initiales | Traitement par déshydratation | | | |
|---|---|---|---|---|---|
| | Capacité volumique (éq/L) | Billes fissurées (%) | Capacité résiduelle (éq/L) | Fragments (%) | Capacité résiduelle (éq/L) |
| XA 2023 Na | 2 | 1 | 1,98 | 6 | 1,88 |
| XA 2023 Na ALT | 2,5 | 0 | 2,5 | 1 | 2,48 |
| XA 2023 Na ALT2 | 2,1 | 0 | 2,1 | 1 | 2,08 |
| Pondération (%) | | - | 25 | - | 100 |

La note globale de chaque résine cationique forte testée est regroupée dans le tableau 19.

**Tableau 19**

| Résine | Note globale selon application acides organiques |
|---|---|
| XA 2023 Na | 2,75 |
| XA 2023 Na ALT | 3,61 |
| XA 2023 Na ALT2 | 3,05 |

Sur cette application particulièrement stressante d'un point de vue température, la résine XA 2023 Na ALT a montré une note globale plus élevée et est la plus adaptée.

Ces exemples sont non restrictifs et d'autres applications utilisant des résines échangeuses d'ions sont envisageables, induisant d'autres pondérations si l'on souhaite arriver à une note globale.

Les exemples ci-dessus présentent les résultats des tests sous forme de tableau, toutefois une représentation graphique sous forme d'histogramme, de graphique type radars, diagramme de Pareto permettent de comparer les résines entre elles

## Revendications

1. Méthode d'évaluation multifactorielle d'une résine échangeuse d'ions sous forme de particules, comprenant au moins deux, de préférence trois des évaluations suivantes :
- une première évaluation de la résine selon un procédé comprenant une mesure initiale de la capacité d'échange de la résine, ainsi qu'une pluralité d'étapes de vieillissement de la résine par oxydation et une mesure de la capacité d'échange de la résine après chaque étape de vieillissement, dans lequel les différentes étapes de vieillissement comprennent le traitement de la résine par une solution oxydante contenant un agent oxydant, la concentration en agent oxydant et/ou la durée de l'étape étant différente entre les différentes étapes ;
- une deuxième évaluation de la résine selon un procédé comprenant successivement une détermination initiale d'une proportion de particules endommagées, une pluralité de cycles de déshydratation de la résine et de réhydratation de la résine, et une détermination finale d'une proportion de particules endommagées ;
- une troisième évaluation de la résine selon un procédé comprenant successivement une détermination initiale d'une proportion de particules endommagées, une pluralité de cycles de traitement de la résine avec une solution acide et une solution basique, et une détermination finale d'une proportion de particules endommagées.

2. Méthode d'évaluation multifactorielle selon la revendication 1, dans laquelle, dans le procédé de la deuxième évaluation, chaque détermination d'une proportion de particules endommagées est réalisée par observation microscopique ; et/ou dans le procédé de la troisième évaluation, chaque détermination d'une proportion de particules endommagées est réalisée par observation microscopique.

3. Méthode d'évaluation multifactorielle selon l'une des revendication 1 à 2, dans laquelle la résine échangeuse d'ions est une résine cationique.

4. Méthode d'évaluation multifactorielle selon l'une des revendications 1 à 3, dans laquelle le procédé de la première évaluation comprend une première étape de vieillissement, une deuxième étape de vieillissement et une troisième étape de vieillissement, la deuxième étape de vieillissement ayant une durée plus étendue que la première étape de vieillissement et la concentration de la solution oxydante en agent oxydant lors de la troisième étape de vieillissement étant plus élevée que la concentration de la solution oxydante en agent oxydant lors de la deuxième étape de vieillissement.

5. Méthode d'évaluation multifactorielle selon la revendication 4, dans laquelle la première étape de vieillissement a une durée de 1 à 12 h, de préférence de 4 à 8 h et les deuxième et troisième étapes de vieillissement ont une durée de 16 à 32 h, de préférence de 20 à 28 h.

6. Méthode d'évaluation multifactorielle selon l'une des revendications 4 à 5, dans laquelle la solution oxydante a une concentration massique en agent oxydant de 1 à 10 %, de préférence de 2 à 5 % lors de la première étape de vieillissement et de la deuxième étape de vieillissement, et la solution oxydante a une concentration massique en agent oxydant de 10 à 30 %, de préférence de 12 à 20 % lors de la troisième étape de vieillissement.

7. Méthode d'évaluation multifactorielle selon l'une des revendications 3 à 6, dans laquelle la résine est une résine gel cationique forte, et de préférence, dans le procédé de la troisième évaluation :
- le nombre de cycles de traitement est de 250 à 750, et/ou
- la solution acide comprend de l'acide chlorhydrique, de préférence encore à une concentration massique de 1 à 10%.

8. Méthode d'évaluation multifactorielle selon l'une des revendications 3 à 6, dans laquelle la résine est une résine macroporeuse cationique forte ou faible, et de préférence, dans le procédé de la troisième évaluation :
- le nombre de cycles de traitement est de 250 à 750, et/ou
- la solution acide comprend de l'acide chlorhydrique, de préférence encore à une concentration massique de 1 à 10%.

9. Méthode d'évaluation multifactorielle selon l'une des revendication 1 à 2, dans laquelle la résine échangeuse d'ions est une résine anionique, et de préférence l'agent oxydant est l'hypochlorite de sodium.

10. Méthode d'évaluation multifactorielle selon la revendication 9, dans laquelle le procédé de la première évaluation comprend une première étape de vieillissement, une deuxième étape de vieillissement et une troisième étape de vieillissement, la deuxième étape de vieillissement ayant une durée plus étendue que la première étape de vieillissement et la troisième étape de vieillissement ayant une durée plus étendue que la deuxième étape de vieillissement.

11. Méthode d'évaluation multifactorielle selon la revendication 10, dans laquelle la première étape de vieillissement a une durée de 1 à 12 h, de préférence de 4 à 8 h, la deuxième étape de vieillissement a une durée de 16 à 32 h, de préférence de 20 à 28 h, la troisième étape de vieillissement a une durée de 3 à 7 jours, de préférence de 4 à 6 jours.

12. Méthode d'évaluation multifactorielle selon l'une des revendications 9 à 11, dans laquelle la concentration massique de la solution oxydante en agent oxydant est de 1 à 10 %, de préférence de 2 à 5 %.

13. Méthode d'évaluation multifactorielle selon l'une des revendications 1 à 12, comprenant :
- la première évaluation et la deuxième évaluation ; ou
- la première évaluation et la troisième évaluation ; ou
- la deuxième évaluation et la troisième évaluation ;
- ou la première évaluation, la deuxième évaluation et la troisième évaluation.

14. Méthode d'évaluation multifactorielle selon l'une des revendications 1 à 13, comprenant une évaluation globale de la résine obtenue par pondération de la première, deuxième et/ou troisième évaluation, de préférence la pondération dépendant d'une pluralité de facteurs relatifs à une utilisation de la résine, ces facteurs étant de préférence choisis parmi la nature chimique d'un éluant ou d'un régénérant ou d'une solution de lavage destiné à être mis en contact avec la résine, une température de stockage, de transport ou d'utilisation de la résine, la position des regards d'une colonne contenant la résine et la nature de produits destinés à être purifiés ou séparés au moyen de la résine.

15. Procédé de sélection d'une résine comprenant la mise en oeuvre de la méthode d'évaluation multifactorielle selon l'une des revendications 1 à 14 sur une pluralité de résines, et le choix d'une résine en fonction de la méthode d'évaluation multifactorielle.
